# EUROPEAN PATENT SPECIFICATION

(11) **EP 4 278 625 B1**
(45) Date of publication and mention of the grant of the patent: **25.09.2024**
(21) Application number: 22702606.9
(22) Date of filing: 14.01.2022
(51) Int. Cl.: H04W 4/08

(54) **USER EQUIPMENT, NETWORK NODE AND METHODS FOR MBS SESSIONS**
BENUTZERGERÄT, NETZWERKKNOTEN UND VERFAHREN DARIN
ÉQUIPEMENT UTILISATEUR, NOEUD DE RÉSEAU ET PROCÉDÉS ASSOCIÉS

(30) Priority: 14.01.2021 US 202163137532 P
(43) Date of publication of application: 22.11.2023
(73) Proprietor: Telefonaktiebolaget LM Ericsson (publ), 164 83 Stockholm (SE)
(72) Inventor: SCHLIWA-BERTLING, Paul, 585 71 Ljungsbro (SE); VESELY, Alexander, 8330 Feldbach (AT)
(74) Representative: Ericsson
(86) International application number: PCT/EP2022/050724
(87) International publication number: WO 2022/152833

(56) References cited:
- "3rd Generation Partnership Project; Technical Specification Group Services and System Aspects; Study on architectural enhancements for 5G multicast-broadcast services (Release 17)", 2 November 2020 (2020-11-02), XP051950097, Retrieved from the Internet <URL:https://ftp.3gpp.org/tsg_sa/WG2_Arch/Latest_SA2_Specs/Latest_draft_S2_Specs/23757-110.zip 23757-110_MCCclean.docx> [retrieved on 20201102]
- ERICSSON: "KI #1, Sol #2: Solution 2 update", vol. SA WG2, no. Electronic; 20200601 - 20200612, 22 May 2020 (2020-05-22), XP051889722, Retrieved from the Internet <URL:https://ftp.3gpp.org/tsg_sa/WG2_Arch/TSGS2_139e_Electronic/Docs/S2-2003679.zip S2-2003679_MBS_Solution2_update_v3_May21.doc> [retrieved on 20200522]

## Description

### TECHNICAL FIELD

This disclosure relates to Multicast Broadcast Services (MBS). Embodiments herein relate to a User Equipment (UE), a network node and methods performed therein.

### BACKGROUND

The 3rd Generation Partnership Project (3GPP) is currently working on introducing support for 5G MBS (5MBS).

The documents "3rd Generation Partnership Project; Technical Specification Group Services and System Aspects; Study on architectural enhancements for 5G multicast-broadcast services (Release 17)" (XP051950097) and ERICSSON: "KI #1, Sol #2: Solution 2 update",vol. SA WG2, no. Electronic; 20200601 - 20200612 (XP051889722) are related to support for MBS.

In a typical wireless communication network, wireless devices, also known as wireless communication devices, mobile stations, stations (STA) and/or UEs, communicate via a Wide Area Network or a Local Area Network such as a Wi-Fi network or a cellular network comprising a Radio Access Network (RAN) part and a Core Network (CN) part. The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a NodeB, eNodeB (eNB), or gNB as denoted in Fifth Generation (5G) telecommunications. A service area or cell area is a geographical area where radio coverage is provided by the radio network node. The radio network node communicates over an air interface operating on radio frequencies with the wireless device within range of the radio network node.

3GPP is the standardization body for specify the standards for the cellular system evolution, e.g., including 3G, 4G, 5G and the future evolutions. Specifications for the Evolved Packet System (EPS), also called a Fourth Generation (4G) network, have been completed within the 3rd Generation Partnership Project (3GPP). As a continued network evolution, the new releases of 3GPP specifies a 5G network also referred to as 5G New Radio (NR).

Multi-antenna techniques can significantly increase the data rates and reliability of a wireless communication system. The performance is in particular improved if both the transmitter and the receiver are equipped with multiple antennas, which results in a Multiple-Input Multiple-Output (MIMO) communication channel. Such systems and/or related techniques are commonly referred to as MIMO.

In addition to faster peak Internet connection speeds, 5G planning aims at higher capacity than current 4G, allowing higher number of mobile broadband users per area unit, and allowing consumption of higher or unlimited data quantities in gigabyte per month and user. This would make it feasible for a large portion of the population to stream high-definition media many hours per day with their mobile devices, when out of reach of Wi-Fi hotspots. 5G research and development also aims at improved support of machine to machine communication, also known as the Internet of things, aiming at lower cost, lower battery consumption and lower latency than 4G equipment.

### SUMMARY

Certain challenges presently exist. For instance, a scalability aspect appears if MBS Session resources, e.g., Packet Data Unit (PDU) Session resources, at a non-MBS supporting 5G base station, denoted "gNB", have to be established for UEs that are currently not in the RRC_CONNECTED state. Also, if the registration area of UEs spans supporting and non-supporting gNBs, then the effort in terms of paging resources is evident - especially for large Multicast (MC) groups.

The solution is specified by the independent claims.

An advantage of the embodiments is that they provide a scalable paging solution for MBS in non-MBS supporting RAN, e.g., NG-RAN, since the UE is required to monitor for paging occasions and to react on paging for a group ID provided to the UE. The group ID is allocated by a core network function for the MBS session. The UE determines whether a received paging message comprises the group ID.

### BRIEF DESCRIPTION OF THE DRAWINGS

The accompanying drawings, which are incorporated herein and form part of the specification, illustrate various embodiments.
FIG. 1 illustrates a system according to an embodiment.
FIG. 2a is a message flow diagram according to an embodiment.
FIG. 2b is a block diagram of a network node according to an embodiment.
FIG. 2c is a block diagram of a UE according to an embodiment.
FIG. 3 is a flowchart illustrating a process according to an embodiment.
FIG. 4a is a flowchart illustrating a process according to an embodiment.
FIG. 4b is a flowchart illustrating a process according to an embodiment.
FIG. 5 illustrates block diagram according to an embodiment.

### DETAILED DESCRIPTION

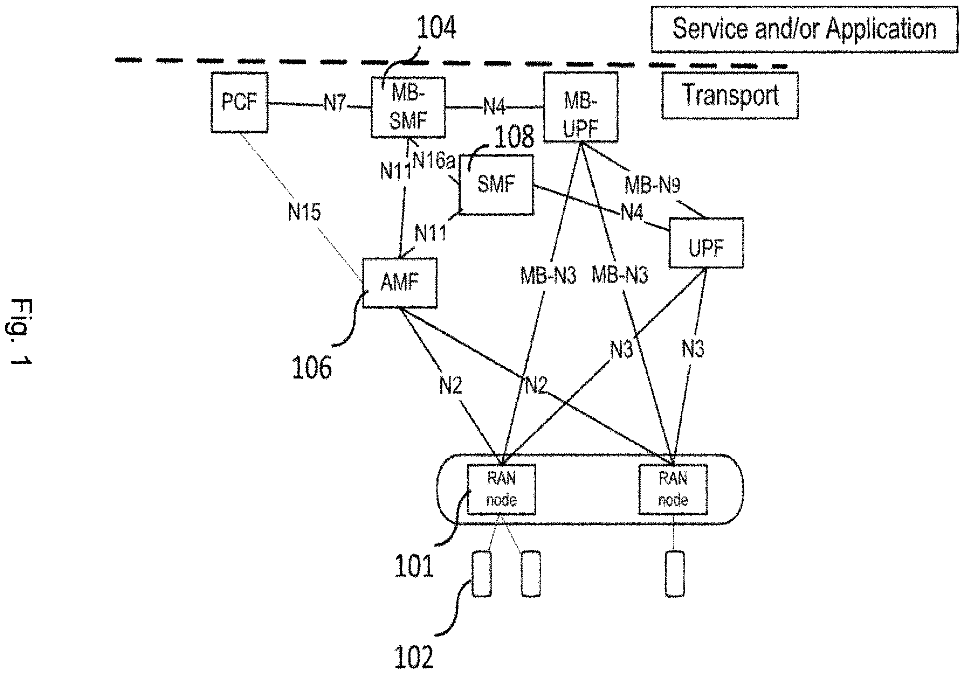

**FIG. 1** illustrates a system 100 according to an embodiment. When a UE, e.g., **a UE 102,** moves from a RAN node that supports 5MBS to a RAN node that does not support 5MBS, the network and the UE 102 shall support switch from 5GC Shared MBS traffic delivery method to 5GC Individual MBS traffic delivery method, e.g., unicast delivery. As noted above, however, a scalability aspect appears if MBS Session resources, e.g., PDU Session resources, at a non-MBS gNB have to be established for UEs that are currently not in the RRC_CONNECTED state. Also, if the registration area of UEs spans supporting and non-supporting gNBs, then the effort in terms of paging resources is evident - especially for large MC groups.

Accordingly, in one embodiment, this disclosure provides that the UE 102 is required to monitor for paging occasions and react on paging for a group ID, e.g., "group 5G-S-Temporary Mobile Subscriber Identity (TMSI)", allocated by a core network function, e.g., **an MB-SMF 104,** an **AMF 106,** an **SMF 108,** for the MBS session and provided via NAS to the UE at MBS Session joining procedure.

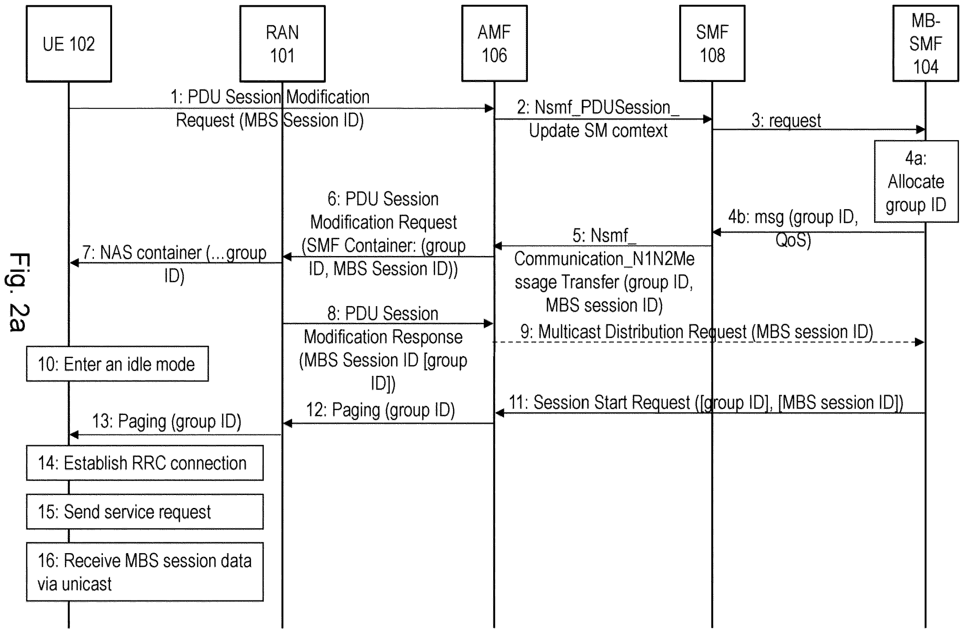

**FIG. 2a** is a message flow diagram illustrating a process according to an embodiment, which is described below.
1. The UE 102 transmits a message for joining an MBS session identified by an MBS session ID. For example, the UE 102 may transmit a PDU Session Modification Request to its serving AMF 106 comprising the MBS session ID. At this point it is assumed the MBS session is inactive.
2. The AMF 106 sends a message to the SMF 108, e.g., Nsmf_PDUSession Update SM context.
3. The SMF 108 sends a request message to the MB-SMF 104 serving the MBS session identified by the MBS session ID.
4a. The MB-SMF 104 allocates a group ID for the MBS session identified by the MBS session ID. The group ID may be a group 5G-S-TMSI.
4b. The MB-SMF 104 may transmit to the SMF 108 a message comprising the group ID. This message may also comprise Quality-of-Service (QoS) information for the MBS session.
5. The SMF 108 transmits to the AMF 106 a message, e.g., Nsmf_Communication_N1N2Message Transfer, that comprises the group ID.
6. The AMF 106 may transmit to **a RAN node 101,** e.g., a gNB, a message, e.g., a PDU Session Modification Request comprising a NAS container, e.g. an SMF container, that comprises the group ID.
7. The RAN node 101 may transmit to the UE 102 a message comprising a NAS container, e.g., the SMF NAS container, comprising the group ID. The UE 102 is configured to listen to the paging occasions with that group ID.
8. The RAN node 101 may transmit to the AMF 106 a message, e.g., PDU Session Modification Response, that includes the MBS session ID. The message may also contain the group ID. In this way, the serving AMF 106 holds UE context for the UE 102 and is aware of the MBS sessions the UE 102 has joined. That is, the AMF 106 is aware that UE 102 has joined the MBS session identified by the MBS session ID included in the message from the RAN node 101.
9. If necessary, the AMF 106 transmits to MB-SMF 104 a message, e.g., Multicast Distribution Request, comprising the MBS session ID. This message is for informing the MB-SMF 104 that the AMF 106 is serving a UE that has joined the MBS session so that the MB-SMF 104 will know that it will need to send a session start request to the AMF 106 when the MBS session identified by the MBS session ID is started.
10. The UE 102 moves into an idle state.
11. Due, for example, to a trigger from an application layer, the MBS Session starts, and the MB-SMF 104 sends to the AMF 106 a message informing the AMF 106 about the session start and indicating the group ID. For example, the message may include the group ID and/or the MBS session ID to which the group ID is allocated. The message may also contain among items QoS information for the QoS flows associated with the MBS Session.
12 and 13. In this scenario, the AMF 106 is aware that the UE 102 has joined the starting MBS Session and that the UE 102 is an idle state, e.g., CM-IDLE. Accordingly, the AMF 106 triggers the RAN node 101 to transmit a page with the group ID, e.g., Group-5G-S-TMSI, associated to the MBS Session. The UE 102 has been configured to listen to the paging occasions with that group ID.
14. The UE 102, in response to receiving the page and determining that the page comprises the group ID, the UE 102 moves to the connected state. For example, the UE 102 performs the conventional random access procedure to establish an RRC connection with the RAN node 101.
15. After establishing the connection with the RAN node 101, the UE 102 may transmit to the core network a service request.
16. Thereafter, the UE 102 may start receiving MBS data for the MBS session via a unicast transmission from the RAN node 101.

In the example described above, the MB-SMF 104 allocates the group ID associated with the MBS Session and this group ID is sent to the UE 102 in NAS during joining. The UE 102 may use the group ID to monitor for paging occasions and react on paging for the group ID when camping on a non-MBS supporting NG-RAN, e.g., RAN node 101, after it joined an MBS Session. MBS supporting RAN nodes may use this group ID as well. In another embodiments, the group ID can be allocated by the SMF 108 or the AMF 106. To avoid collisions due to re-use of same 5G-S-TMSI for different UEs or MBS Sessions, the involved entities can be configured with 5G-S-TMSI ranges being reserved.

The AMF 106 may also forward the MBS Session Start information to the MBS supporting RAN nodes within the MBS Session Setup Request message to allocated shared MBS resources. UEs in the MBS Supporting RAN in RRC_INACTIVE are paged via RAN paging with the same group ID, e.g., Group-5G-S-TMSI or another associated paging identifier. When the UEs of the multicast group are in RRC_CONNECTED they are configured with the shared MBS resources.

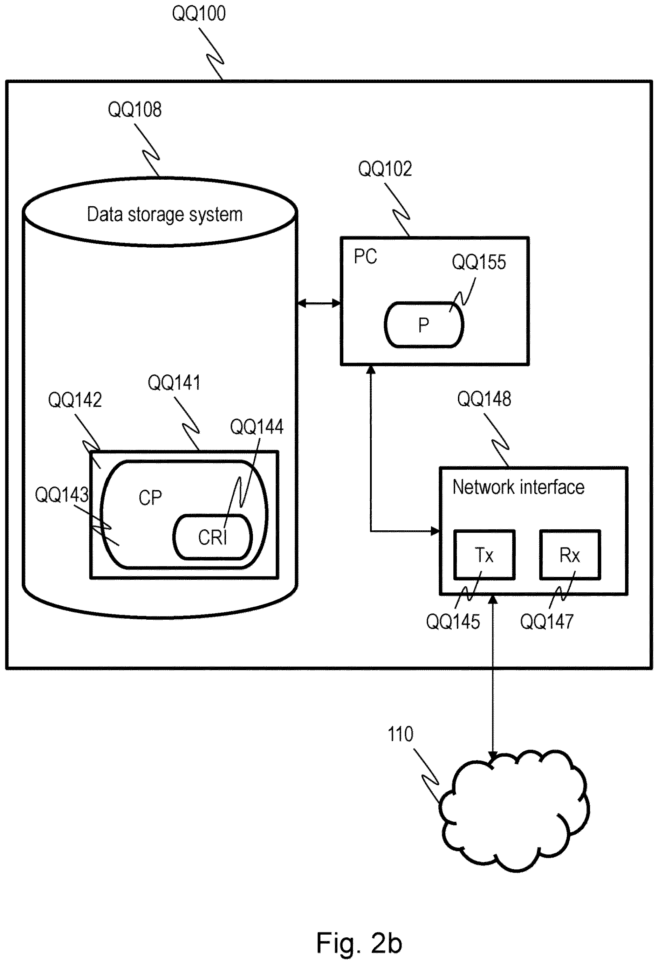

**FIG. 2b** is a block diagram of a network node QQ100, according to some embodiments, that can be used to implement any one of the core network functions described herein, e.g., MB-SMF 104, AMF 106, SMF 108. As shown in FIG. 2b, network node Q100 may comprise: processing circuitry (PC) QQ102, which may include one or more processors (P) QQ155, e.g., one or more general purpose microprocessors and/or one or more other processors, such as an application specific integrated circuit (ASIC), field-programmable gate arrays (FPGAs), and the like, which processors may be co-located in a single housing or in a single data center or may be geographically distributed, i.e., network node QQ100 may be a distributed computing apparatus; at least one network interface QQ148, e.g., a physical interface or air interface, comprising a transmitter (Tx) QQ145 and a receiver (Rx) QQ147 for enabling network node QQ100 to transmit data to and receive data from other nodes connected to a network 110, e.g., an Internet Protocol (IP) network, to which network interface QQ148 is connected, physically or wirelessly, e.g., network interface QQ148 may be coupled to an antenna arrangement comprising one or more antennas for enabling network node Q100 to wirelessly transmit/receive data; and a local storage unit, a.k.a., "data storage system", QQ108, which may include one or more non-volatile storage devices and/or one or more volatile storage devices. In embodiments where PC QQ102 includes a programmable processor, a computer program product (CPP) QQ141 may be provided. CPP QQ141 includes a computer readable medium (CRM) QQ142 storing a computer program (CP) QQ143 comprising computer readable instructions (CRI) QQ144. CRM QQ142 may be a non-transitory computer readable medium, such as, magnetic media, e.g., a hard disk, optical media, memory devices, e.g., random access memory, flash memory, and the like. In some embodiments, the CRI QQ144 of computer program QQ143 is configured such that when executed by PC QQ102, the CRI causes the network node Q100 to perform steps described herein, e.g., steps described herein with reference to the flow charts. In other embodiments, the network node QQ100 may be configured to perform steps described herein without the need for code. That is, for example, the PC QQ102 may consist merely of one or more ASICs. Hence, the features of the embodiments described herein may be implemented in hardware and/or software.

**FIG. 2b** is a block diagram of the UE 102, according to some embodiments. As shown in FIG. 2b, the UE 102 may comprise: a PC QQ202, which may include one or more P QQ255, e.g., one or more general purpose microprocessors and/or one or more other processors, such as an ASIC, FPGAs, and the like; communication circuitry QQ248, which is coupled to an antenna arrangement QQ249 comprising one or more antennas and which comprises a Tx QQ245 and a Rx QQ247 for enabling the UE 102 to transmit data and receive data, e.g., wirelessly transmit/receive data; and a local storage unit, a.k.a., "data storage system" QQ208, which may include one or more non-volatile storage devices and/or one or more volatile storage devices. In embodiments where the PC QQ202 includes a programmable processor, a CPP QQ241 may be provided. The CPP QQ241 includes a CRM QQ242 storing a CP QQ243 comprising CRI QQ244. The CRM QQ242 may be a non-transitory computer readable medium, such as, magnetic media, e.g., a hard disk, optical media, memory devices, e.g., random access memory, flash memory, and the like. In some embodiments, the CRI QQ244 of the computer program QQ243 is configured such that when executed by the PC QQ202, the CRI causes the UE 102 to perform actions described herein, e.g., actions described herein with reference to the flow charts. In other embodiments, the UE 102 may be configured to perform actions described herein without the need for code. That is, for example, the PC QQ202 may consist merely of one or more ASICs. Hence, the features of the embodiments described herein may be implemented in hardware and/or software.

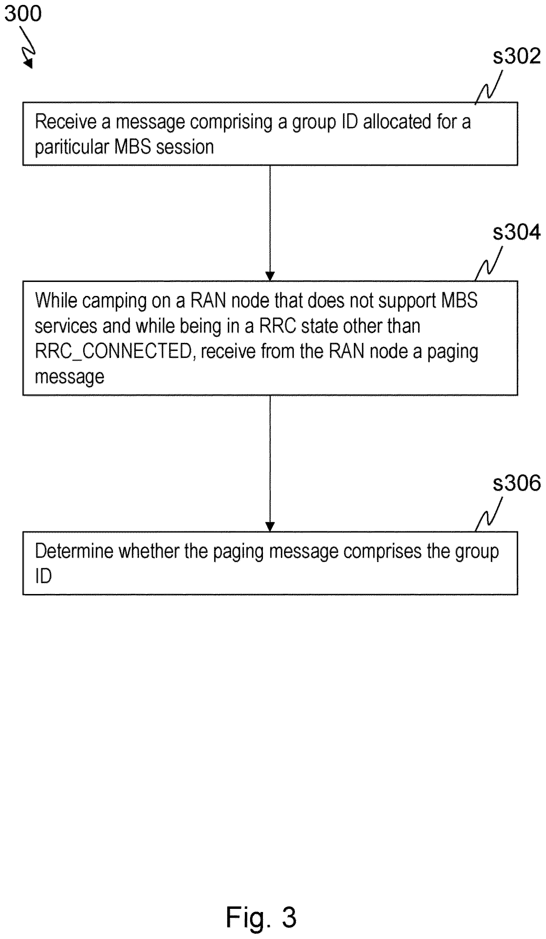

A method according to embodiments herein will now be described from the view of the UE 102 together with **FIG. 3****.**

Example embodiments of a method performed by the UE 102, will now be described with reference to a flowchart depicted in FIG. 3. The method comprises the following actions which may be taken in any suitable order.

**Action s302.** The UE 102 receives a first message comprising the group ID allocated for a particular MBS session. The first message may e.g. be a NAS message and/or comprising a NAS container, such as e.g. an SMF NAS container. The group ID may be comprised in the NAS container. The MBS session may be identified by the MBS session ID. The group ID may be a group 5G-S-TMSI. The UE 102 may be configured to listen to the paging occasions with the group ID. For example, the UE 102 sends a "join message" when joining an MBS session, then the UE 102 receives a response, such as e.g. the first message, to the message. In other words, the message may be response to message sent by the UE 102 when joining the MBS session. The "join message" may e.g. be PDU Session Modification Request message sent to an AMF, such as the AMF 106. In some embodiments, prior to receiving the first message, the UE 102 transmits a request to join the MBS session. This may be the "join message" mentioned above. The request may comprise the MBS session ID identifying the MDS session.

**Action s304.** While camping on a RAN node, such as e.g. the RAN node 101, that does not support MBS services and while being in a RRC state other than RRC_CONNECTED, the UE 102 receives a paging message from the RAN node, e.g. the RAN node 101. In some embodiments, the paging message comprises the group ID. The AMF 106 may trigger RAN node 101 to transmit the page with the group ID, which e.g. may be a Group-5G-S-TMSI, associated to the MBS Session. The UE may have been configured to listen to the paging occasions with that group ID.

**Action s306.** The UE 102 determines whether the paging message comprises the group ID. In some embodiments, in response to determining that the paging message comprises the group ID, the UE 102 establishes a connection with the RAN node 101. This may mean that the UE 102 moves to a connected state. E.g. the UE 102 performs the conventional legacy random access procedure and sends a service request comprising the MBS identifier, such as e.g. the MBS Session ID, to the network. After establishing the connection with the RAN node 101, the UE 102 may receive data for the MBS session via a unicast transmission from the RAN node 101. The data for the MBS session may be MBS data.

The UE 102 may comprise processing circuitry and a memory containing instructions executable by the processing circuitry. The UE may be configured to perform the above discussed method.

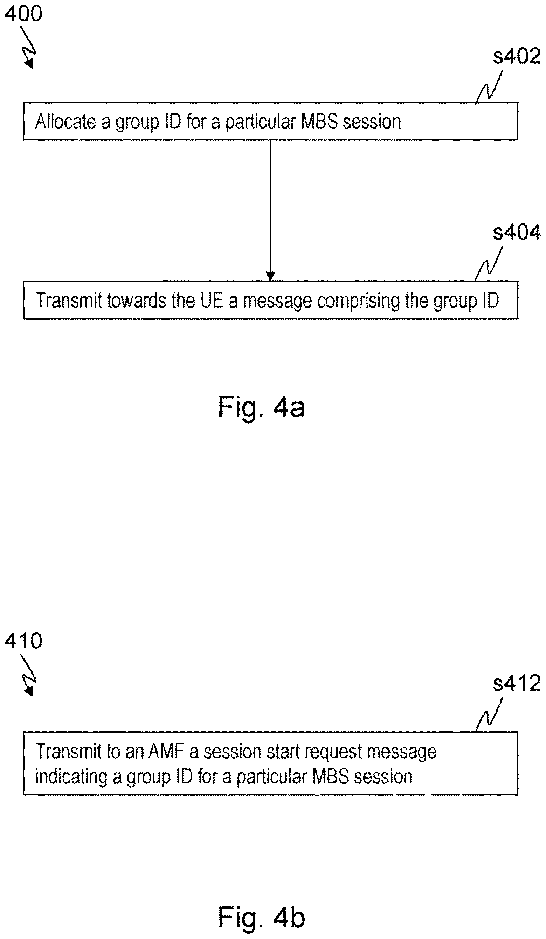

A method according to embodiments herein will now be described from the view of the network node QQ100 together with **FIG. 4a****.**

Example embodiments of a method performed by the network node QQ100 implementing a core network function, will now be described with reference to a flowchart depicted in FIG. 4a. The network node QQ100 may e.g., be any one out of: The MB-SMF 104, AMF 106 or SMF 108. The method comprises the following actions which may be taken in any suitable order.

**Action s402.** The network node QQ100 allocates the group ID for a particular MBS session. The group ID may be a group 5G-S-TMSI.

**Action s404.** The network node QQ100 transmits a message comprising the group ID toward the UE 102. The message may e.g. be the first message referred to above. In some embodiments, transmitting the message toward the UE 102 comprises transmitting the message to an SMF, e.g. the SMF 108. In some embodiments, the network node QQ100 transmits a session start request message indicating the group ID to an AMF, e.g. the AMF 106. The start request message may e.g., comprise the group ID and/or the MBS session ID. The message may also contain among items QoS information for the QoS flows associated with the MBS Session. The session start request message may trigger the AMF, e.g. the AMF 106, to initiate a paging procedure if the AMF is serving a UE that has joined the MBS session and that is in a non-connected state. Initiating the paging procedure may comprise triggering the RAN node 101 to transmit a page with the group ID, such as e.g., Group-5G-S-TMSI, associated to the MBS Session.

The network node QQ100 may comprise processing circuitry; and a memory. The memory may contain instructions executable by the processing circuitry, whereby the network node QQ100 is configured to perform the above discussed method.

A method according to embodiments herein will now be described from the view of the network node QQ100 together with **FIG. 4b****.**

Example embodiments of a method performed by the network node QQ100 implementing a core network function, will now be described with reference to a flowchart depicted in FIG. 4b. The network node QQ100 may e.g., be any one out of: The MB-SMF 104, AMF 106 or SMF 108. The method comprises the following actions which may be taken in any suitable order.

**Action s412.** The network node QQ100 transmits to an AMF, e.g. the AMF 106, a session start request message indicating a group ID allocated for a particular MBS session. In some embodiments, the session start request message triggers the AMF to initiate a paging procedure if the AMF is serving a UE that has joined the MBS session and that is in a non-connected state. The group ID may be a group 5G-S-TMSI.

The network node QQ100 may comprise processing circuitry; and a memory. The memory may contain instructions executable by the processing circuitry, whereby the network node QQ100 is configured to perform the above discussed method.

### Conclusion

As demonstrated above, group paging for MBS over non-MBS supporting RAN is introduced. A core network function, e.g., MB-SMF, SMF, etc., such as e.g. the network node QQ100, allocates a group ID, e.g., Group-5G-S-TMSI, for a specific MBS session and this identifier allows grouping of UE that are interested to participate in the specific MBS Session based on knowledge that there is non-homogenous MBS support in RAN and the core network function provides that identifier to relevant UEs, such as e.g. the UE 102, over NAS.

While various embodiments are described herein, an in any appendix, it should be understood that they have been presented by way of example only, and not limitation. Thus, the breadth and scope of this disclosure should not be limited by any of the above-described exemplary embodiments. Moreover, any combination of the above-described elements in all possible variations thereof is encompassed by the disclosure unless otherwise indicated herein or otherwise clearly contradicted by context.

Additionally, while the processes described above and illustrated in the drawings are shown as a sequence of steps, this was done solely for the sake of illustration.

### Appendix 1 - additional material

2 Text Proposal
16.x NR MBS
16.x.1 General
16.x.2 Architecture

The overall NG-RAN architecture specified in section 4 applies for NR MBS.
16.x.3 Session Management

Session Management for NR MBS comprises NG-RAN functions
- associated with a UE Context, maintaining information about MBS Sessions the UE has joined and, if applicable, associated QoS flow information to enable 5GC individual MBS traffic delivery as specified in TS 23.501 [3], supporting mobility to gNBs not supporting MBS. On NG-RAN interfaces, these functions are incorporated in existing Session Management protocol functions. These functions are applicable for multicast only.
- associated with the MBS Session Context established for an active MBS Session to enable 5GC shared MBS traffic delivery within a gNB supporting MBS, as specified in TS 23.501 [3]. On NG-RAN interfaces, these functions are realised by a set of functions separate from those associated with a UE context. These functions are applicable for multicast and broadcast.

NG-RAN functions for NR MBS Session Management are defined to cover the following scenarios:
- joining the MBS Session during an active and deactivated multicast MBS Session
- the UE being either the first or a further one within a gNB to join the multicast MBS Session
- start of 5GC shared MBS traffic delivery for UEs in any RRC state

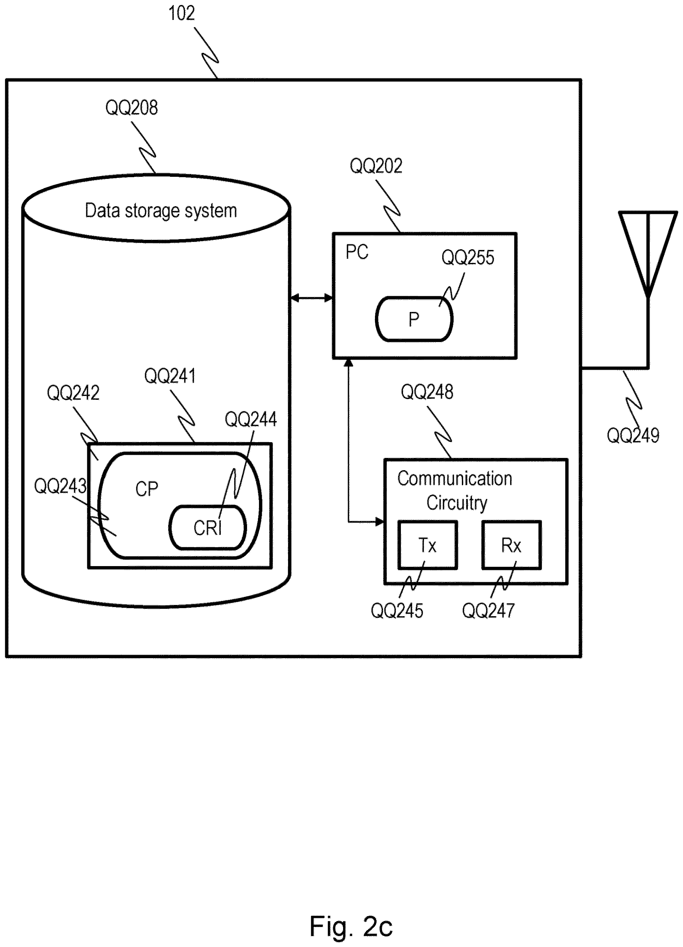

FIG. 2 depicts an example scenario for a UE joining a deactivated multicast MBS Session and subsequent activation of the MBS Session.
1.-3. See TS 23.501, the MBS session is not active yet.
4.-9. The UE joins the MBS session via a probably already established PDU Session, served by an appropriate SMF. The PDU Session information within the UE Context in NG-RAN is updated with MBS Session information, containing the MBS Session ID and, if applicable, associated QoS flow information.
10.-13. The AMF receives and stores the MBS Session ID the UE has joined by the NG-RAN and can determine whether the MB-SMF maintaining the MBS Session Context needs to be informed to update the multicast distribution tree.
14.-18. The MBS Session starts.

Editor's Note: Only control plane entities are shown.
16.x.4 Transmission

Editor's Note: covers layer 1 and layer 2 description of NR MBS transmission.
16.x.4.y Point-to-point (PTP)-Point-to multipoint (PTM) Switching

Editor's Note: covers both PTP to PTM switching and PTM to PTP switching.

The PTP-PTM Switching function is only applicable for a Multicast session and resides in NG-RAN node. It enables the NG-RAN node to decide for which UEs to use PTP or PTM (PTP, PTM to be defined with RAN2) for the MBS session. The NG-RAN node takes its decision based on information such as MBS Session QoS requirements, number of joined UEs, UE individual feedback on reception quality, and other criteria. The same QoS requirements apply regardless of the decision.

PTP and PTM modes can be used simultaneously in the same cell. For Broadcast session only PTM is applicable. For Multicast session both PTP and PTM are applicable.
16.x.5 Mobility
16.x.5.1 General

Mobility principles builds on existing functionality including functions described in section 9.2.
16.x.5.2 Multicast Mobility from MBS supporting cell to MBS supporting cell

During handover preparation phase, the source NG-RAN node transfers to the target NG-RAN node in the UE context information about the MBS sessions the UE has joined. For each Multicast session with ongoing user data transmission for which no MBS Session Resources exist at the target NG-RAN node, the target NG-RAN node triggers the setup of MBS user plane resources towards the 5GC. Which procedures to use is For further study (FFS).

During handover execution, the MBS configuration decided at target NG-RAN node is sent to the UE via the source NG-RAN node within an RRC container, FFS, as specified in TS 38.331 [12].

### Appendix 2 - further additional material

### 2 Discussion

### 2.1 Observation for basic MBS Session Management related RAN functions

This chapter collects observations on basic Session Management related RAN functions starting with discussions on the MBS Session model and "converged" architecture as of TR 23.757 [1] TR 23.757 [1] contains the MBMS session model captured in the conclusion section, which was used as a basis for discussions along with what SA2 called the "SMF based" solution.

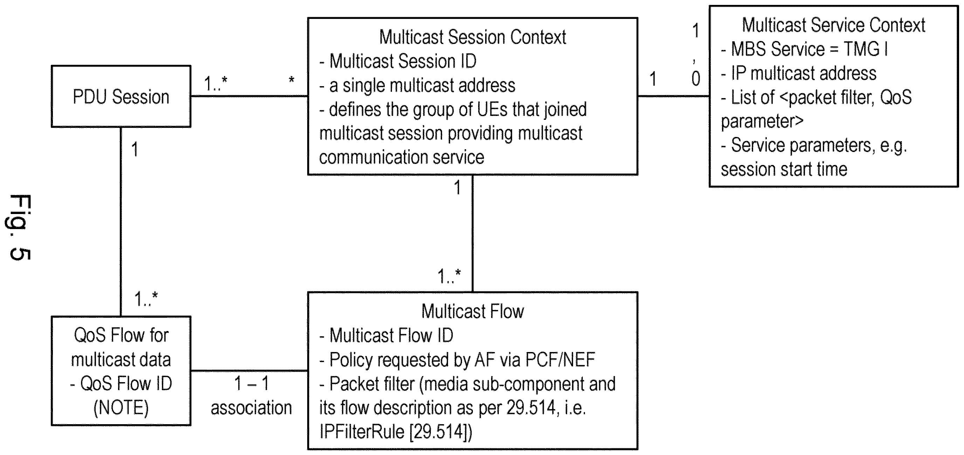

The model itself needs further work and translation for its application for the various system entities, as captured in NOTE 1a in §8.2.2.2 in [1]: The model as depicted in **FIG. 5** needs clarification for its application on UE, 5GC and RAN side, this will be part of normative work.

This MBMS session model needs to be put into relation to the "converged" architecture, agreed as of §8.1 in [1], with the understanding that adaptations to that architecture are still possible and needed. The "converged" architecture is captured in Annex A of [1]. A version of that architecture w/o the service layer entities is depicted in FIG. 1.

So, let's try to work out how the "Merged MBMS session model", as depicted in FIG. 5, translates into NG interface functions.

The conclusions in section §8.2 and §A.3 of [1] can be interpreted to define two sets of NG interface functions:
1) Control of transport for an MBS Session, especially configuring RAN (via AMF) for MBS flows transport, including N3 transport and mobility (see §A.3.3.2 and §A.3.3.5 of [1]).
   - Involved entities for shared 5GC transport (from NG-RAN point of view): NG-RAN, AMF, MB-SMF and MB-User Plane Function (UPF)
   - Involved entities for individual 5GC transport, from NG-RAN point of view: NG-RAN, AMF, SMF and UPF
2) Control for joining an MBS Session. Along agreements in §8.2.2.2 in [1],
   - The PDU session which is used to send the join is the same as the associated PDU Session which is for 5GC Individual MBS traffic delivery.
   - The AMF shall select an SMF that supports 5MBS for multicast session join during PDU session establishment, which is used for sending join, i.e. handling of join requests for 5MBS and/or fallback to individual delivery.
      it can be concluded, that, from an NG-RAN point of view, communication for joining takes place with an SMF, selected by the AMF. With the conclusions that the SMF/MB-SMF based approach, i.e., SMF/MB-SMF handles session management for the UE, for Multicast session is adopted, it can be also concluded, that the NG Application Protocol (NGAP) functions for Control of joining an MBS Session can make use of the modified existing NGAP PDU Session Resource Control functions, as using a PDU Session for joining, as concluded, requires the existence of such a PDU Session. Therefore, the control resource which is used for MBS joining is a PDU Session. The same PDU Session is also used to provide information used for 5GC individual MBS traffic delivery.
   - involved control plane entities for joining, from NG-RAN point of view: NG-RAN, AMF, SMF, in a secondary order, MB-SMF and other entities are involved.

**Observation 1: TR 23.757 conclusions result in 2 set of NGAP protocol functions, which further lead to respective protocol functions on other interfaces: *Control of Transport for an MBS Session* and *Control for joining an MBS Session.***
**Observation 1.1: *Control of Transport for an MBS Session* supports both, 5GC shared MBS traffic delivery and 5GC individual MBS traffic delivery.**
**Observation 1.2: Joining an MBS Service is performed via a PDU Session, the same PDU Session that is also used to perform 5GC individual MBS traffic delivery, if this option is enabled.**

The concluded relation between these two set of functions, *Control of MBS transport* and *Control for joining an MBS Session* can be deduced from the following statements in §8.2.2.2 of TR 23.757 [1]:
- The 5GC shall be able to reject UE joining to a multicast session when the multicast session will not start soon or has not started.
- The 5GC shall be able to trigger NG-RAN nodes to notify session start/activation of an MBS session to UEs.
- The following bullets apply if MB-UPF detecting multicast data triggers MBS Session deactivation or activation.

NOTE 3: Whether the terms "stop/deactivated" or "start/activation" denote the same actions needs to be further clarified.
- The MBS Session may be deactivated when the MB-UPF detects no multicast data for a configurable period. When the MBS Session is deactivated by 5GC, the MBS Session context is kept in 5GC, but the AN resource with context and N3 tunnel for 5GC Shared MBS delivery method are released. UEs that have joined that multicast session can become IDLE:

NOTE 4: Whether the MBS QoS flow need be removed from the MBS Session context is to be decided in normative phase.
- The MBS Session may be activated when the MB-UPF detects multicast data. When the MBS Session needs to be activated, the MB-UPF sends message to the MB-SMF. When the MB-SMF starts the MBS session activation for establishing the transmission resources, the MB-SMF notifies the session activation to NG-RANs via SMFs/AMFs serving UEs within the multicast session. UEs are notified by NG-RAN about the session activation.
- The following bullets apply if AF decides to start or stop a multicast session:

NOTE 5: Whether the terms "stop/deactivated" or "start/activation" denote the same actions needs to be further clarified.
- The MBS Session may be stopped upon AF requests. When the MBS Session is stopped, the MBS Session context is kept in 5GC, but the AN resource with context and N3 tunnel for 5GC Shared MBS delivery method are released. The multicast QoS flow information are removed from the MBS Session context stored at the UE and 5GC NF. UEs that have joined that multicast session can become IDLE.
- The MBS Session may be activated/started upon AF requests. When the MBS Session needs to be activated/started, the NEF or MBSF sends message to the MB-SMF for establishing the transmission resources. The MB-SMF obtains the related Multicast QoS flow information from PCF. When the MB-SMF restarts the MBS session, the MB-SMF notifies the session activation to NG-RANs via SMFs/AMFs serving UEs within the multicast session. UEs are notified by NG-RAN about the session activation.

From the statements quoted above, UEs rejected from joining,
"deactivating/stopping"/"activating/starting" MBS Sessions, it can be seen, that the message flow in Figure 8.2.3-1 of TR 23.757 [1] represents only one specific scenario possible: the UE joins an MBS Session for which MBS traffic delivery is already ongoing. However, there exists also the possibility, that the UE joins an MBS Session for which MBS traffic delivery is not ongoing yet. This might be either due to pauses in between MBS traffic delivery, deactivation/activation of MBS traffic delivery upon MB-UPF or AF request or due to a pause between the Service/Session Announcement and the actual start of MBS traffic delivery.

**Observation 2: NGAP shall support the following scenarios for MBS capable gNBs:**
**2.1) MBS Session exists but no MBS traffic delivery is ongoing in NG-RAN - UEs may join the MBS Session at this point in time.**
**2.2) MBS Session exists, MBS traffic delivery is ongoing and UEs may join the MBS Session at this point in time. There are sub-scenarios conceivable like the UE being the first to join an MBS Session in the NG-RAN node or the AMF.**

TR 23.757 [1] already provides indications of the set of NGAP functions necessary to support those scenarios:
**Observation 3: NGAP shall support the following functions towards MBS capable gNBs:**
**3.1) establishment of MBS Session resources in NG-RAN for 5GC shared MBS traffic delivery with notifying UEs that have joined the MBS Session. UEs may be in any CM/RRC state.**
**3.2) release of MBS Session resources in NG-RAN for 5GC shared MBS traffic delivery**

When it comes to details for support of the 5GC individual MBS traffic delivery, let's have another look at relevant statements in the conclusion section §8.2.2.2 of TR 23.757 [1].

It appears that 23.757 [1] focusses on the to support UE mobility to/from non MBS-capable NG-RAN nodes and to prepare the execution of such mobility by establishing an associated PDU session with associated QoS flows when the UE joins the MBS Session, in fact, as quoted earlier the very same PDU Session is also used to send the join to the 5GC and the associated PDU Session with the associated QoS flows shall be able to be established as early as the joining the MBS Session by the UE happens. Although there is a Editor's Note in [1] keeping it FFS when and whether to establish or update the associated PDU session for 5GC individual MBS traffic delivery, the timing of when associated QoS flow information is provided for the associated PDU session is clearly defined to be between joining the MBS session and right before mobility to a non supporting NG-RAN node happens. In case of Xn based handover, tying the provision of associated QoS flow information to HO would result in NG signalling as part of Xn HO preparation and therefore delaying execution of Xn HO, while one possibility would be to allow only NG based HO in between supporting and non-supporting gNBs, which would clearly limit mobility performance.

In case of homogenous support of MBS (at least within a certain area), associated QoS flow information does not need to be provided at all.

Further, it can be also concluded, that design of NGAP signalling for provision of associated QoS flow information and joining information has to use existing NGAP PDU Session Resource control, as providing 5GC individual MBS traffic delivery in non-supporting gNBs has to work based on pre-Release 17 NGAP PDU Session resource management, and such would not work along with existing functional principles for Xn/NG handover that does not foresee to establish a PDU Session at the target gNB in the course of an Xn/NG handover.

**Observation 4: NGAP shall support the following functions towards MBS capable gNBs:**
**4.1) within the same PDU session control data that is used to join the MBS Session, associated QoS flow information is provided to enable mobility to non MBS-capable gNBs during an ongoing MBS session.**
**4.2) the associated QoS flow information may be provided right at joining or any time (preferably well) before mobility to non-MBS capable gNBs takes place**
**4.3) the associated QoS flow information is not needed at all in case of homogenous support of MBS.**
**4.4) conclusions on joining and provision of associated QoS flow information to take place along signalling for the same PDU Session requires information for both, joining and associated QoS flow to be added to existing PDU Session resource signalling in NGAP, requiring a "backwards compatible" signalling solution.**

Like for MBS capable gNBs observation 3 summarises the establishment of RAN resources for 5GC shared MBS traffic delivery and observation 2 summarises the time-wise interaction between joining and establishment of RAN resources for 5GC shared MBS traffic delivery, TR 23.757 [1] does not contain explicit statements w.r.t. non-MBS capable gNBs.

Joining an MBS service for a UE currently served by a non-MBS capable gNB may be seen as being out of scope for discussions in RAN. It can be assumed, that at least the 5GC would need to support MBS homogeneously in order to maintain the joining state of UEs on Session Management level while the UE moves across areas served by MBS supporting gNBs and non-MBS supporting gNBs, and, moreover, support switching between 5GC shared MBS traffic delivery in MBS supporting gNBs and 5GC individual MBS traffic delivery in non-MBS supporting gNBs. It should be discussed whether joining shall be supported via non-MBS supporting gNBs. Joining is triggered and handled at NAS level and, dependent on further SA2 discussions, it might be possible that even w/o RAN support of MBS the UE is allowed to successfully perform joining.

However, one might also argue that 5GS should be able to restrict joining MBS sessions outside the RAN support area of MBS, which would require capability indications to be provide in SIB, and, if such support should be controllable by the 5GS, respective indication on NAS. In any case, SA2 and RAN2 should be consulted.

Another aspect is the fact that keeping the transparency of AMF for Session Management signalling does not allow the AMF to be aware of UEs that have joined an MBS Session. An MB-SMF, in general not keeping UE contexts, may fail at Session Start to contact the AMF serving a UE in CM-IDLE which has joined the MBS Session and has not yet moved to a gNB supporting MBS.

**Observation 5: There are no NGAP functions involved for a UE joining an MBS Session within the serving area of a non-MBS supporting gNB, provided NAS functions support such scenario. However, TR 23.757 is not explicit on that possibility. Further, there are scenarios conceivable where an MB-SMF fails to contact the AMF at Session Start if the UE has not yet moved to a gNB supporting MBS. If deemed necessary, SA2 and RAN2, maybe CT1, should be consulted whether, and if, how, such functionality shall be allowed and/or controlled.**

TR 23.757 [1] is also not explicit on whether the scenario of establishing RAN resources in a non-MBS supporting gNB shall be supported w/o the UE receiving MBS traffic via 5GC shared MBS traffic delivery from a MBS supporting gNB before. This aspect is related to discussion on observation 3, where the NGAP support of establishing MBS Session resources at an MBS supporting gNB for UEs in any CM/RRC state would also include some kind of paging of UEs not in RRC_CONNECTED. While individual paging of UE is for sure a theoretical option, it would not scale at all for large MC groups. A scalability aspect of the same nature would also appear if "individual" MBS Session resources (in fact PDU Session resources) at a non-MBS supporting gNB have to be established for UEs currently not in RRC_CONNECTED.

Such function would also require interaction between the MB-SMF and the SMFs holding the, e.g. associated, PDU Session Contexts, to establish or modify PDU Session Resources with associated QoS Flow(s) for establishing resources for 5GC individual MBS traffic delivery. This aspect is left for SA2 to further discuss, but we should establish certain assumptions if we continue that road.

Also, if the registration area of UEs span over supporting and non-supporting gNBs, the effort in terms of paging resources is evident - especially for large MC groups.

One solution for this scalability issue could be requiring the UE to listing to paging occasions and react on paging for a kind of "group 5G-S-TMSI" allocated by the MB-SMF for the MBS Session and provided via NAS to the UE at joining. While naming and highlighting the scaling issue is a RAN3 topic, the hinted solution is obviously not.

**Observation 6: TR 23.757 is not explicit on whether establishment of RAN resources for 5GC individual MBS traffic delivery shall be supported w/o the UE being provided with MBS content via 5GC shared MBS traffic delivery for the same ongoing session before via an MBS supporting gNB. UEs not in RRC_CONNECTED would need to be paged individually and, dependent on the registration area of UEs, indication of the MBS Session start and successful establishment of RAN resources would need to be coordinated among supporting and non-supporting gNBs. It is also assumed that SMF is able to establish or to modify the (associated) PDU Session with (associated) QoS flow at establishment of 5GC individual MBS traffic delivery towards a non-MBS supporting gNB. For large MC groups there is an evident scaling issue. While identifying the scalability issue is clearly a RAN3 topic, designing a potential solution via e.g. a kind of "group paging" mechanism utilising a "MC group 5G-S-TMSI" is clearly not. Respective TSGs/WGs should be contacted.**

A similar scalability aspect arises when looking at Session Management signalling aspects during mobility towards non-supporting gNBs. It is expected, that the associated QoS flow information is only provided to the non-supporting gNB during an ongoing session, in order to enable continuous reception MBS traffic at the non-supporting gNB, while during a "deactivated" MBS session, the associated QoS flow would be released, including RAN and NG-U resources, as concluded in TR 23.757 [1] §8.2.2.2. That means, that every subsequent (re)activation of the MBS Session would not only cause a potential scaling problem due to paging but also but also due to necessary signalling for the modification of the (associated) PDU Session by which resources for the associated QoS flows are established for 5GC individual MBS traffic delivery. All those functions would work in principle, and are available as well, but do not scale well for large MC groups. We do not see any possibility to solve this issue for PDU Session modification with legacy, pre-Rel-17, means but propose to highlight the issue to SA2 and RAN2.

**Observation 7: Activation of an MBS Session and establishment of RAN resources in non-MBS supporting gNBs cause scalability issues for large MC groups due to the expected amount of signalling induced by, UE individual, modification of the associated PDU Session to establish the associated QoS flows for the MBS Session. SA2 and RAN2 should be contacted.**
- 2.2 Functional conclusions of RAN aspects for MBS session management
- 2.2.1 Control of Transport for an MBS Session for 5GC shared MBS traffic delivery - Multicast

As discussed in section 2.1, the message flow in figure 8.2.3-1 in TR 23.757 [1] only shows on scenario of when MBS Session resources in an MBS supporting gNB are established. The UE may very well join while no MBS traffic delivery is ongoing, an MBS session may be deactivated and re-activated thereafter.

We would like to see a single set of functions covering all the possible scenarios.

For this reason, the following is proposed:
**Proposal 1: Introduce a set of 5GC triggered class-1 NGAP procedures for establishing, modifying and releasing MBS Session resources in RAN in analogy to the already existing NGAP procedures for PDU Session control. These new set of procedures shall be "connection oriented" in analogy to UE-associated signalling, terminology and the range of "connection" identifiers are suggested in Annex A.**

In order to build up the distribution tree along the UEs that have joined an MBS Session, supporting joining during an inactive MBS Session, the AMF would need to know the joining status of UEs, which is not the case along current TR 23.757, which follows an approach to hide this information from AMF, due to direct communication between SMF and NG-RAN. However, as the SMF is unaware, and should be kept unaware, of the RAN nodes that have to be contacted in case of Session Start, the AMF needs to act as intermediate node of the distribution tree and keep the distribution tree up-to-date along information of joined MBS Sessions per UE. One way to realise this requirement is to inform the AMF about the MBS Session the UE has joined within PDU Session signalling, i.e. via NGAP in the response message of the NGAP PDU Session procedure outside the SMF container.

**Proposal 2: Introduce the possibility to inform the AMF about the MBS Sessions joined in order to allow the AMF to update the distribution tree towards the MB-SMF and to keep track of NG-RAN nodes to be contacted at Session Start along the Registration Area of UEs in CM-IDLE.**

**Proposal 3: Liaise SA2 about those changes in the overall message flow in Figure 8.2.3-1 following proposal 1 and 2.**
- 2.2.2 Control of Transport for an MBS Session for 5GC shared MBS traffic delivery - Broadcast

As can be seen the set of class 1 procedures proposed in Proposal 1 can be very well used for setting up RAN resources for a broadcast MBS Session. Not only for broadcast, but also for (local) multicast MBS Sessions, area information would need to be included in this set of class 1 procedures.

**Proposal 4: Define the set of class 1 procedures proposed in Proposal 1 to be used also for setting up RAN resources for a broadcast MBS Session. Introduce optional area information, which can be also used for local multicast MBS traffic delivery.**
- 2.2.3 PDU Session Resource control for joining an MBS Session and provision of associated QoS flow information

As discussed above in the "observing" section, NGAP needs functions to support provision of joining information and associated QoS flow information within a PDU Session to a supporting gNB. Provision of associated QoS flow information may be provided at joining or later or not at all, in case of homogenous support of MBS.

Further, design of NGAP needs to be backwards-compatible with pre-Release 17 NGAP PDU Session resource control.

There would be the possibility to develop 2 solutions, one for homogenous support of MBS, one for interworking with non-supporting gNBs, however, we believe that would not be necessary and we would like to show how a (unified) solution could look like:
- for homogenous support of MBS, the existing PDU Session List Items ares enhanced by MBS Session Information the UE has joined and that are supported by the slice the PDU Session is associated with.
- in case 5GC individual MBS traffic delivery needs to be supported
   - provide per joined MBS Session information associated QoS flow information
   - during an active MBS Session,
      - in NGAP, in the course of joining or at NG HO, include in the legacy QoS Flows List the associated QoS flow information and
         in XnAP, at HO, include in the legacy QoS Flows List the associated QoS flow information
   - a supporting gNB will ignore this information due to the presence of MBS Session information with associated QoS flow information and establish / provide resources for 5GC shared MBS traffic delivery
   - a non-supporting gNB will establish resources for 5GC individual MBS traffic delivery.
- during an inactive MBS Session,
   - in NGAP, in the course of joining or at NG HO, do not include in the legacy QoS Flows List the associated QoS flow information and
      in XnAP, at HO, do not include in the legacy QoS Flows List the associated QoS flow information
      - a supporting gNB will take the information regarding the joined MBS Sessions into account but not establish any resources for 5GC shared MBS traffic delivery
      - a non-supporting gNB will not see any additional (the associated) QoS flows and therefore not establish resources for 5GC individual MBS traffic delivery.

Finally, there also needs to be an explicit indication to the SMF holding the, e.g. associated, PDU Session context for the UE to know whether another session anchor needs to be established for 5GC individual MBS traffic delivery as the w/o this information the 5GC has to assume that the RAN was not able to understand and store MBS related information in the UE context. Such explicit indication is necessary at, e.g. associated, PDU Session Setup with MBS Session related information, at HO Resource Allocation, at Path Switch and potential subsequent PDU Session Modification.

**Proposal 5: In NGAP and XnAP, within PDU Session related messages, add to the PDU Session List Item, MBS Session Information for the MBS Sessions the UE joined and are supported by the slice the PDU Session is associated with. Foresee the possibility to include to the MBS Session Information associated QoS flow information, which will be also added to legacy QoS Flows List during if the MBS Session is currently ongoing. A supporting gNB will ignore the QoS Flows in the QoS Flows List associated to the ongoing MBS Session, a non-supporting gNB will establish resources for 5GC individual MBS traffic delivery.**

**And don't forget to provide an explicit indication to the SMF holding the, e.g. associated, PDU Session context for the UE whether the provided MBS Session Information is actually stored in the gNB. RAN node supports MBS.**
- 3 Conclusion and Proposals

We have analysed the SA2 conclusions captured in TR 23.757 [1] and have observed the following:
**Observation 1: TR 23.757 conclusions result in 2 set of NGAP protocol functions, which further lead to respective protocol functions on other interfaces: *Control of Transport for an MBS Session* and *Control for joining an MBS Session.***
   Observation 1.1: *Control of Transport for an MBS Session* supports both, 5GC shared MBS traffic delivery and 5GC individual MBS traffic delivery.
   Observation 1.2: Joining an MBS Service is performed via a PDU Session, the same PDU Session that is also used to perform 5GC individual MBS traffic delivery, if this option is enabled.
Observation 2: NGAP shall support the following scenarios for MBS capable gNBs:
   2.1) MBS Session exists but no MBS traffic delivery is ongoing in NG-RAN - UEs may join the MBS Session at this point in time.
   2.2) MBS Session exists, MBS traffic delivery is ongoing and UEs may join the MBS Session at this point in time. There are sub-scenarios conceivable like the UE being the first to join an MBS Session in the NG-RAN node or the AMF.
Observation 3: NGAP shall support the following functions towards MBS capable gNBs:
   3.1) establishment of MBS Session resources in NG-RAN for 5GC shared MBS traffic delivery with notifying UEs that have joined the MBS Session. UEs may be in any CM/RRC state.
   3.2) release of MBS Session resources in NG-RAN for 5GC shared MBS traffic delivery
Observation 4: NGAP shall support the following functions towards MBS capable gNBs:
   4.1) within the same PDU session control data that is used to join the MBS Session, associated QoS flow information is provided to enable mobility to non MBS-capable gNBs during an ongoing MBS session.
   4.2) the associated QoS flow information may be provided right at joining or any time, preferably well, before mobility to non-MBS capable gNBs takes place or not at all in case of homogenous support of MBS.
   4.3) conclusions on joining and provision of associated QoS flow information to take place along signalling for the same PDU Session requires information for both, joining and associated QoS flow to be added to existing PDU Session resource signalling in NGAP, requiring a "backwards compatible" signalling solution.
Observation 5: There are no NGAP functions involved for a UE joining an MBS Session within the serving area of a non-MBS supporting gNB, provided NAS functions support such scenario. However, TR 23.757 is not explicit on that possibility. Further, there are scenarios conceivable where an MB-SMF fails to contact the AMF at Session Start if the UE has not yet moved to a gNB supporting MBS. SA2 and RAN2, maybe CT1 should be consulted whether, and if, how, such functionality shall be allowed and/or controlled.
Observation 6: TR 23.757 is not explicit on whether establishment of RAN resources for 5GC individual MBS traffic delivery shall be supported w/o the UE being provided with MBS content via 5GC shared MBS traffic delivery for the same ongoing session before via an MBS supporting gNB. UEs not in RRC_CONNECTED would need to be paged individually and, **dependent on the registration area of UEs, indication of the MBS Session start and successful establishment of RAN resources would need to be coordinated among supporting and non-supporting gNBs. It is also assumed that SMF is able to establish or to modify the (associated) PDU Session with, e.g. associated, QoS flow at establishment of 5GC individual MBS traffic delivery towards a non-MBS supporting gNB. For large MC groups there is an evident scaling issue. While identifying the scalability issue is clearly a RAN3 topic, designing a potential solution via e.g. a kind of "group paging" mechanism utilising a "MC group 5G-S-TMSI" is clearly not. Respective TSGs/WGs should be contacted.**
**Observation 7: Activation of an MBS Session and establishment of RAN resources in non-MBS supporting gNBs cause scalability issues for large MC groups due to the expected amount of signalling induced by, UE individual, modification of the associated PDU Session to establish the associated QoS flows for the MBS Session. SA2 and RAN2 should be contacted.**

Following those observations, the following conclusions have been drawn for MBS session management in NG-RAN:
**Proposal 1: Introduce a set of 5GC triggered class-1 NGAP procedures for establishing, modifying and releasing MBS Session resources in RAN in analogy to the already existing NGAP procedures for PDU Session control. These new set of procedures shall be "connection oriented" in analogy to UE-associated signalling, terminology and the range of "connection" identifiers are suggested in Annex A.**
**Proposal 2: Introduce the possibility to inform the AMF about the MBS Sessions joined in order to allow the AMF to update the distribution tree towards the MB-SMF and to keep track of NG-RAN nodes to be contacted at Session Start along the Registration Area of UEs in CM-IDLE.**
**Proposal 3: Liaise SA2 about those changes in the overall message flow in Figure 8.2.3-1 following proposal 1 and 2.**
**Proposal 4: Define the set of class 1 procedures proposed in Proposal 1 to be used also for setting up RAN resources for a broadcast MBS Session. Introduce optional area information, which can be also used for local multicast MBS traffic delivery.**
**Proposal 5: In NGAP and XnAP, within PDU Session related messages, add to the PDU Session List Item, MBS Session Information for the MBS Sessions the UE joined and are supported by the slice the PDU Session is associated with. Foresee the possibility to include to the MBS Session Information associated QoS flow information, which will be also added to legacy QoS Flows List during if the MBS Session is currently ongoing. A supporting gNB will ignore the QoS Flows in the QoS Flows List associated to the ongoing MBS Session, a non-supporting gNB will establish resources for 5GC individual MBS traffic delivery.**
**Proposal 6: Agree on the following TPs: for TS 38.300 in [2], for TS 38.410 in [3] and for TS 38.413 [4]**

### • 4 References

[1] TR 23.757 "Study on architectural enhancements for 5G multicast-broadcast services, Release 17", version 1.2.0
[2] R3-210640 "[TP for BL CR TS 38.300] TP on Session Management for NR MBS", input to RAN3 # 111-e
[3] R3-210641 "[TP for BL CR TS 38.410] TP on Session Management for NR MBS", input to RAN3 # 111-e
[4] R3-210642 "[TP for BL CR TS 38.413] TP on Session Management for NR MBS", input to RAN3#111-e

## Claims

1. A method (300) performed by a User Equipment, UE, (102), the method comprising:
transmitting a request to join a particular multicast-broadcast services, MBS, session, the request comprising an MBS session identifier, ID identifying the particular MBS session,
in response to the request to join the particular MBS session, receiving (s302) a first message comprising a group ID allocated for the particular MBS session, the group ID being a group 5G-S-Temporary Mobile Subscriber Identity, 5G-S-TMSI; and
while camping on radio access network, RAN, node (101) that does not support MBS services and while being in a radio resource control, RRC, state other than RRC_CONNECTED, receiving (s304) from the RAN node (101) a paging message; and
determining (s306) whether the paging message comprises the group ID.

2. The method of claim 1, further comprising:
in response to determining that the paging message comprises the group ID, establishing a connection with the RAN node (101).

3. The method of claim 2, further comprising:
after establishing the connection with the RAN node (101), receiving data for the MBS session via a unicast transmission from the RAN node (101).

4. A computer program (QQ243) comprising instructions (QQ244) which when executed by processing circuitry (QQ202) of a UE (102), causes the UE (102) to perform the method of any one of claims 1-3.

5. A carrier containing the computer program of claim 4, wherein the carrier is one of an electronic signal, an optical signal, a radio signal, and a computer readable storage medium (QQ242).

6. A User Equipment, UE, (102), wherein the UE (102) is configured to:
transmit a request to join a particular multicast-broadcast services, MBS, session, the request comprising an MBS session identifier, ID, identifying the particular MBS session;
in response to the request to join the particular MBS session, receive a first message comprising a group ID allocated for the particular MBS session, the group ID being a group 5G-S-Temporary Mobile Subscriber Identity, 5G-S-TMSI; and
while camping on radio access network, RAN, node (101) that does not support MBS services and while being in a radio resource control, RRC, state other than RRC_CONNECTED, receive from the RAN node (101) a paging message; and
determine whether the paging message comprises the group ID.

7. The UE (102) of claim 6, wherein the UE (102) is further configured to perform the method of any one of claims 2-3.

8. A method performed by a network node (QQ100) implementing a core network function, the method comprising:
receiving a request to join a particular multicast-broadcast services, MBS, session, the request comprising an MBS session identifier, ID, identifying the particular MBS session,
allocating a group ID for the particular MBS session, the group ID being a group 5G-S-Temporary Mobile Subscriber Identity, SG-S-TMSI;
wherein the UE is required to monitor for paging occasions comprising the group ID; and
transmitting toward a User Equipment, UE, (102) a message comprising the group ID.

9. The method of claim 8, wherein transmitting the message toward the UE (102) comprises transmitting the message to a session management function, SMF, (108).

10. The method of claims 8-9, further comprising:
transmitting to an access and mobility management function, AMF, (106) a session start request message indicating the group ID.

11. The method of claim 10, wherein the session start request message triggers the AMF (106) to initiate a paging procedure if the AMF (106) is serving a UE (102) that has joined the MBS session and that is in a non-connected state.

12. A computer program (QQ143) comprising instructions (QQ144) which when executed by processing circuitry (QQ102) of a network node (QQ100), causes the network node (Q100) to perform the method of any one of claims 9-11.

13. A carrier containing the computer program of claim 12, wherein the carrier is one of an electronic signal, an optical signal, a radio signal, and a computer readable storage medium (QQ142).

14. A network node (QQ100), wherein the network node (QQ100) is configured to:
receive a request to join a particular multicast-broadcast services, MBS, session, the request comprising an MBS session identifier, ID, identifying the particular MBS session,
allocate a group ID for the particular MBS session, the group ID being a group SG-S-Temporary Mobile Subscriber Identity, SG-S-TMSI;
wherein the UE is required to monitor for paging occasions comprising the group ID; and
transmit toward a User Equipment, UE, (102) a message comprising the group ID.

15. The network node (QQ100) of claim 14, wherein the network node (QQ100) is further configured to perform the method of any one of claims 9-11.

## Patentansprüche

1. Verfahren (300), das von einer Benutzereinrichtung, UE, (102) durchgeführt wird, wobei das Verfahren umfasst:
Senden einer Anforderung zum Beitreten zu einer spezifischen Multicast-Broadcast-Dienste-Sitzung, MBS-Sitzung, wobei die Anforderung eine MBS-Sitzungskennung, ID, umfasst, die die spezifische MBS-Sitzung identifiziert,
Empfangen (s302) einer ersten Nachricht, die eine Gruppen-ID umfasst, die der spezifischen MBS-Sitzung zugewiesen ist, in Reaktion auf die Anforderung zum Beitreten zu der spezifischen MBS-Sitzung, wobei die Gruppen-ID eine temporäre 5G-S-Mobilteilnehmergruppenkennung, 5G-S-TMSI, ist; und
Empfangen (s304) einer Funkrufnachricht von einem Funkzugangsnetzwerkknoten, RAN-Knoten, (101), der keine MBS-Dienste unterstützt, während des Wartens auf den RAN-Knoten (101) und während in einem anderen Funkressourcensteuerungszustand, RRC-Zustand, als dem RRC_CONNECTED befindlich; und
Bestimmen (s306), ob die Funkrufnachricht die Gruppen-ID umfasst.

2. Verfahren nach Anspruch 1, ferner umfassend:
Herstellen einer Verbindung mit dem RAN-Knoten (101) in Reaktion auf ein Bestimmen, dass die Funkrufnachricht die Gruppen-ID umfasst.

3. Verfahren nach Anspruch 2, ferner umfassend:
Empfangen von Daten für die MBS-Sitzung über eine Unicast-Übertragung vom RAN-Knoten (101) nach dem Herstellen der Verbindung mit dem RAN-Knoten (101).

4. Computerprogramm (QQ243), umfassend Anweisungen (QQ244), die bei Ausführung durch Verarbeitungsschaltungsanordnung (QQ202) einer UE (102) die UE (102) zum Durchführen des Verfahrens nacheinem der Ansprüche 1 bis 3 veranlassen.

5. Datenträger, der das Computerprogramm nach Anspruch 4 enthält, wobei der Datenträger eines von einem elektronischen Signal, einem optischen Signal, einem Funksignal und einem computerlesbaren Speichermedium (QQ242) ist.

6. Benutzereinrichtung, UE, (102), wobei die UE (102) konfiguriert ist zum:
Senden einer Anforderung zum Beitreten zu einer spezifischen Multicast-Broadcast-Dienste-Sitzung, MBS-Sitzung, wobei die Anforderung eine MBS-Sitzungskennung, ID, umfasst, die die spezifische MBS-Sitzung identifiziert,
Empfangen einer ersten Nachricht, die eine Gruppen-ID umfasst, die der spezifischen MBS-Sitzung zugewiesen ist, in Reaktion auf die Anforderung zum Beitreten zu der spezifischen MBS-Sitzung, wobei die Gruppen-ID eine temporäre 5G-S-Mobilteilnehmergruppenkennung, 5G-S-TMSI, ist; und
Empfangen einer Funkrufnachricht von einem Funkzugangsnetzwerkknoten, RAN-Knoten, (101), der keine MBS-Dienste unterstützt, während des Wartens auf den RAN-Knoten (101) und während in einem anderen Funkressourcensteuerungszustand, RRC-Zustand, als dem RRC_CONNECTED befindlich; und
Bestimmen, ob die Funkrufnachricht die Gruppen-ID umfasst.

7. UE (102) nach Anspruch 6, wobei die UE (102) ferner zum Durchführen des Verfahrens nach einem der Ansprüche 2 bis 3 konfiguriert ist.

8. Verfahren, das von einem Netzwerkknoten (QQ100) durchgeführt wird, der eine Kernnetzwerkfunktion implementiert, wobei das Verfahren umfasst:
Empfangen einer Anforderung zum Beitreten zu einer spezifischen Multicast-Broadcast-Dienste-Sitzung, MBS-Sitzung, wobei die Anforderung eine MBS-Sitzungskennung, ID, umfasst, die die spezifische MBS-Sitzung identifiziert,
Zuweisen einer Gruppen-ID für die spezifische MBS-Sitzung, wobei die Gruppen-ID eine temporäre 5G-S-Mobilteilnehmergruppenkennung, 5G-S-TMSI, ist;
wobei die UE ferner auf Funkrufgelegenheiten überwachen muss, die die Gruppen-ID umfassen; und
Senden einer Nachricht, die die Gruppen-ID umfasst, an eine Benutzereinrichtung, UE, (102).

9. Verfahren nach Anspruch 8, wobei das Senden der Nachricht an die UE (102) ein Senden der Nachricht an eine Sitzungsverwaltungsfunktion, SMF, (108) umfasst.

10. Verfahren nach Anspruch 8 bis 9, ferner umfassend:
Senden einer Sitzungsstartanforderungsnachricht, die die Gruppen-ID angibt, an eine Zugangs- und Mobilitätsverwaltungsfunktion, AMF, (106).

11. Verfahren nach Anspruch 10, wobei die Sitzungsstartanforderungsnachricht die AMF (106) zum Initiieren einer Funkrufprozedur auslöst, wenn die AMF (106) eine UE (102) bedient, die der MBS-Sitzung beigetreten ist und die in einem nicht verbundenen Zustand ist.

12. Computerprogramm (QQ143), umfassend Anweisungen (QQ144), die bei Ausführung durch Verarbeitungsschaltungsanordnung (QQ102) eines Netzwerkknotens (QQ100) den Netzwerkknoten (QQ100) zum Durchführen des Verfahrens nach einem der Ansprüche 9 bis 11 veranlassen.

13. Datenträger, der das Computerprogramm nach Anspruch 12 enthält, wobei der Datenträger eines von einem elektronischen Signal, einem optischen Signal, einem Funksignal und einem computerlesbaren Speichermedium (QQ142) ist.

14. Netzwerkknoten (QQ100), wobei der Netzwerkknoten (QQ100) konfiguriert ist zum:
Empfangen einer Anforderung zum Beitreten zu einer spezifischen Multicast-Broadcast-Dienste-Sitzung, MBS-Sitzung, wobei die Anforderung eine MBS-Sitzungskennung, ID, umfasst, die die spezifische MBS-Sitzung identifiziert,
Zuweisen einer Gruppen-ID für die spezifische MBS-Sitzung, wobei die Gruppen-ID eine temporäre 5G-S-Mobilteilnehmergruppenkennung, 5G-S-TMSI, ist;
wobei die UE ferner auf Funkrufgelegenheiten überwachen muss, die die Gruppen-ID umfassen; und
Senden einer Nachricht, die die Gruppen-ID umfasst, an eine Benutzereinrichtung, UE, (102).

15. Netzwerkknoten (QQ100) nach Anspruch 14, wobei der Netzwerkknoten (QQ100) ferner zum Durchführen des Verfahrens nach einem der Ansprüche 9 bis 11 konfiguriert ist.

## Revendications

1. Procédé (300) réalisé par un équipement utilisateur, UE, (102), le procédé comprenant :
la transmission d'une demande de participation à une session de services multicast-broadcast, MBS, particulière, la demande comprenant un identifiant, ID, de session MBS qui identifie la session MBS particulière,
en réponse à la demande de participation à la session MBS particulière, la réception (s302) d'un premier message comprenant un ID de groupe attribué à la session MBS particulière, l'ID de groupe étant une identité d'abonné mobile temporaire 5G-S, 5G-S-TMSI, de groupe ; et
en campant sur un noeud de réseau d'accès radio, RAN, (101) qui ne prend pas en charge de services MBS et en étant dans un état de commande de ressources radio, RRC, autre que RRC_CONNECTED, la réception (s304), depuis le noeud RAN (101), d'un message de radiomessagerie ; et
la détermination (s306) si le message de radiomessagerie comprend ou non l'ID de groupe.

2. Procédé selon la revendication 1, comprenant en outre :
en réponse à la détermination que le message de radiomessagerie comprend l'ID de groupe, l'établissement d'une connexion avec le noeud RAN (101).

3. Procédé selon la revendication 2, comprenant en outre :
après l'établissement de la connexion avec le noeud RAN (101), la réception de données pour la session MBS via une transmission unicast depuis le noeud RAN (101).

4. Programme informatique (QQ243) comprenant des instructions (QQ244) qui, lorsqu'elles sont exécutées par une circuiterie de traitement (QQ202) d'un UE (102), amènent l'UE (102) à réaliser le procédé selon l'une quelconque des revendications 1 à 3.

5. Support contenant le programme informatique selon la revendication 4, dans lequel le support est l'un parmi un signal électronique, un signal optique, un signal radio et un support de stockage lisible par ordinateur (QQ242).

6. Equipement utilisateur, UE, (102), dans lequel l'UE (102) est configuré pour :
transmettre une demande de participation à une session de services multicast-broadcast, MBS, particulière, la demande comprenant un identifiant, ID, de session MBS qui identifie la session MBS particulière ;
en réponse à la demande de participation à la session MBS particulière, recevoir un premier message comprenant un ID de groupe attribué à la session MBS particulière, l'ID de groupe étant une identité d'abonné mobile temporaire 5G-S, 5G-S-TMSI, de groupe ; et
en campant sur un noeud de réseau d'accès radio, RAN, (101) qui ne prend pas en charge de services MBS et en étant dans un état de commande de ressources radio, RRC, autre que RRC CONNECTED, recevoir, depuis le noeud RAN (101), un message de radiomessagerie ; et
déterminer si le message de radiomessagerie comprend ou non l'ID de groupe.

7. UE (102) selon la revendication 6, dans lequel UE (102) est en outre configuré pour réaliser le procédé selon l'une quelconque des revendications 2 et 3.

8. Procédé réalisé par un noeud de réseau (QQ100) mettant en oeuvre une fonction de réseau central, le procédé comprenant :
la réception d'une demande de participation à une session de services multicast-broadcast, MBS, particulière, la demande comprenant un identifiant, ID, de session MBS qui identifie la session MBS particulière,
l'attribution d'un ID de groupe à la session MBS particulière, l'ID de groupe étant une identité d'abonné mobile temporaire 5G-S, 5G-S-TMSI, de groupe ;
dans lequel l'UE est tenu de surveiller des occasions de radiomessagerie comprenant l'ID de groupe ; et
la transmission, à un équipement utilisateur, UE, (102), d'un message comprenant l'ID de groupe.

9. Procédé selon la revendication 8, dans lequel la transmission du message à l'UE (102) comprend la transmission du message à une fonction de gestion de session, SMF, (108).

10. Procédé selon les revendications 8 et 9, comprenant en outre :
la transmission, à une fonction de gestion d'accès et de mobilité, AMF, (106), d'un message de demande de début de session indiquant l'ID de groupe.

11. Procédé selon la revendication 10, dans lequel le message de demande de début de session déclenche l'AMF (106) pour initier une procédure de radiomessagerie si l'AMF (106) dessert un UE (102) qui participe à la session MBS et qui est dans un état non connecté.

12. Programme informatique (QQ143) comprenant des instructions (QQ144) qui, lorsqu'elles sont exécutées par une circuiterie de traitement (QQ102) d'un noeud de réseau (QQ100), amènent le noeud de réseau (Q100) à réaliser le procédé selon l'une quelconque des revendications 9 à 11.

13. Support contenant le programme informatique selon la revendication 12, dans lequel le support est l'un parmi un signal électronique, un signal optique, un signal radio et un support de stockage lisible par ordinateur (QQ142).

14. Noeud de réseau (QQ100), dans lequel le noeud de réseau (QQ100) est configuré pour :
recevoir une demande de participation à une session de services multicast-broadcast, MBS, particulière, la demande comprenant un identifiant, ID, de session MBS qui identifie la session MBS particulière,
attribuer un ID de groupe à la session MBS particulière, l'ID de groupe étant une identité d'abonné mobile temporaire 5G-S, 5G-S-TMSI, de groupe ;
dans lequel l'UE est tenu de surveiller des occasions de radiomessagerie comprenant l'ID de groupe ; et
transmettre, à un équipement utilisateur, UE, (102), un message comprenant l'ID de groupe.

15. Noeud de réseau (QQ100) selon la revendication 14, dans lequel le noeud de réseau (QQ100) est en outre configuré pour réaliser le procédé selon l'une quelconque des revendications 9 à 11.
